# DEMANDE DE BREVET EUROPEEN

(11) **EP 1 559 966 A2**
(43) Date de publication de la demande: **03.08.2005**
(21) Numéro de dépôt: 05362001.9
(22) Date de dépôt: 24.01.2005
(51) Int. Cl.: F24J 2/34, F24J 2/05

(54) **Système de chauffe-eau solaire avec capteurs tubulaires sous vide, permettant d'éviter un surpresseur, lors de l'utilisation sur le réseau d'eau**

(30) Priorité: 02.02.2004 FR 0400946
(71) Demandeur: Carraz, J. Paul, 47200 Virazeil (FR); Carraz, Christiane, 47200 Virazeil (FR); Carraz, Alexandre, 47200 Virazeil (FR); Carraz, Emmanuel, 47200 Virazeil (FR)
(72) Inventeur: Carraz, J. Paul, 47200 Virazeil (FR)

(57) **Abrégé**

Un tube (3) (cuivre, fer ...) résistant à la pression du réseau d'eau, d'une longueur suffisante (serpentin)baigne dans l'eau chaude de cuve (1) .En branchant le tube en direct sur le réseau, on supprime le surpresseur électrique, et l'eau du réseau en circulant dans le serpentin récupérera au fur et à mesure la chaleur accumulée par le chauffe eau solaire .

## Description

Nous commercialisons des chauffe-eau solaires avec capteurs (verre) tubulaires sous vide .De conception et fabrication très simple ; ils sont commercialisés à des prix très abordables .

INCONVENIENT majeur : La cuve et son étanchéité ne résiste pas à la pression du réseau de distribution d'eau . D'ou la nécessité d'utiliser à l'arrivée d'eau de la cuve un système de coupure automatique de la pression, une fois la cuve pleine (cloche avec flotteur) et à la sortie de la cuve , un surpresseur électrique pour renvoyer sous pression dans le circuit sanitaire, l'eau chaude du chauffe-eau .

Pour éviter ces inconvénients , l'invention propose d'introduire dans la cuve un tube résistant à la pression du réseau d'eau , conducteur de chaleur (cuivre , fer,....), d'une longueur suffisante (serpentin) pour permettre un échange thermique satisfaisant entre l'eau du réseau circulant à l'intérieur du tube et l'eau chaude du chauffe-eau . Ce tube branché en direct sur le réseau d'eau ,supprime la cloche avec flotteur et le surpresseur électrique .Avec l'échange thermique l'eau du réseau récupérera au fur et à mesure la chaleur accumulée dans l'eau de la cuve par les capteurs solaires .

### DESCRIPTIF ET FONCTIONNEMENT

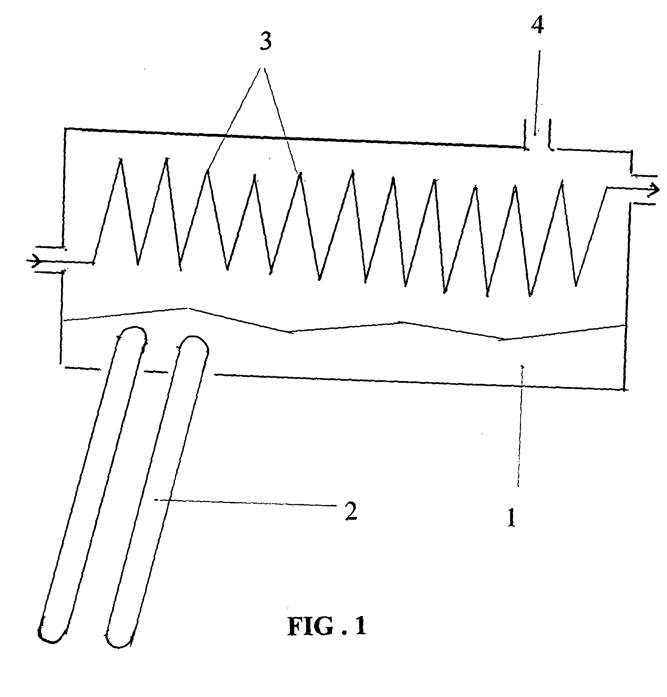

La figure annexée (fig 1) illustre à titre non limitatif un mode de réalisation de l'invention .

Le chauffe-eau est composé d'une cuve isolée (1)percée de plusieurs orifices (avec joints d'étanchéité) pour recevoir les capteurs solaires (2)

Les capteurs (2) sont composés de tubes en verre avec double parois ,un vide d'air entre les deux parois .La matière active transformant la lumière solaire en chaleur est déposée dans la double paroi sur la face interne .

Les rayons solaires traversent la première paroi ,se transforment en chaleur au contact de la deuxième paroi avec la matière active .L'isolation thermique réalisée par le vide d'air, piège et concentre la chaleur à l'intérieur du tube . Les capteurs en verre entrent en force dans les orifices de la cuve, l'étanchéité est réalisée par la simple compression du joint entre le tube en verre et le rebord de la cuve .

La cuve est remplie d'eau par l'orifice du haut (4), cette eau se réchauffe au contact des capteurs solaires

Un tube (3) résistant à la pression de l'eau du réseau ,conducteur de chaleur (cuivre, fer, aluminium, inox ,.....) d'une longueur suffisante (serpentin), traverse la cuve (1) .Le serpentin baigne dans l'eau de la cuve .

Le tube (3) est branché en direct sur le réseau d'eau (plus de coupure de pression) .L'eau du réseau en circulant dans le tube récupérera par échange thermique, au fur et à mesure, la chaleur accumulée par l'eau de la cuve au contact des capteurs solaires .

## Revendications

1. Chauffe eau solaire comprenant une cuve (1), comportant un orifice de remplissage (4), des capteurs tubulaires sous vide (2) partiellement insérés dans la cuve au travers de joints, **caractérisé en ce qu'**il comporte un serpentin (3) baignant dans l'eau de la cuve et réalisé à partir d'un tube et comportant une entrée d'eau raccordable au réseau de distribution et une sortie raccordable à un réseau sanitaire.

2. Chauffe eau solaire selon la revendication 1 **caractérisé en ce que** le tube est un tube métallique conducteur de chaleur.

3. Chauffe eau solaire selon la revendication 1 ou 2 **caractérisé en ce que** le serpentin est d'une longueur et d'un diamètre tels que l'eau du réseau circulant dans le tube récupère la chaleur accumulée par l'eau dans la cuve par échange thermique.

4. Dispositif de chauffage d'eau à capteur solaire selon l'une des revendications 1 à 3 **caractérisé en ce qu'**il comporte, en amont du chauffe eau un branchement direct du tube sur le réseau de distribution et dépourvu de système de coupure automatique de pression.

5. Dispositif de chauffage d'eau à capteur solaire selon l'une des revendications 1 à 3 **caractérisé en ce qu'**il comporte en aval du chauffe eau un circuit sanitaire sous pression dépourvu de surpresseur.
